**Europäisches Patentamt**

(19) **European Patent Office**

**Office européen des brevets**

(11) Veröffentlichungsnummer: **0 134 434**
**B1**

---

(12) **EUROPÄISCHE PATENTSCHRIFT**

---

(45) Veröffentlichungstag der Patentschrift:
**15.10.86**

(21) Anmeldenummer: **84106920.6**

(22) Anmeldetag: **16.06.84**

(51) Int. Cl.⁴: **D 21 G 1/02**, B 21 B 29/00

---

(54) **Walze mit hydraulisch anpassbarer Biegelinie.**

---

(30) Priorität: **16.07.83 DE 3325793**

(43) Veröffentlichungstag der Anmeldung:
**20.03.85 Patentblatt 85/12**

(45) Bekanntmachung des Hinweises auf die Patenterteilung:
**15.10.86 Patentblatt 86/42**

(84) Benannte Vertragsstaaten:
**CH DE FR GB IT LI**

(56) Entgegenhaltungen:
**CH-A-564 381**
**DE-B-1 087 443**
**DE-B-2 461 914**
**US-A-2 344 274**
**US-A-3 196 520**
**US-A-4 282 639**
**US-A-4 327 468**

(73) Patentinhaber: **Ramisch Kleinewefers GmbH,
Neuer Weg 24- 40, D-4150 Krefeld (DE)**

(72) Erfinder: **Friz, Werner, Ing.- grad., Buschdonk 1,
D-4150 Krefeld (DE)**

(74) Vertreter: **Goddar, Heinz J., Dr., FORRESTER &
BOEHMERT Widenmayerstrasse 4/I, D-8000
München 22 (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Walze mit hydraulisch anpaßbarer Biegelinie aus einem drehfesten Joch, auf dem ein drehbarer Rohrmantel gelagert ist, der auf der Seite einer dem Joch gegenüberliegenden Gegenwalze über ein hydraulisches Druckpolster auf dem Joch abgestützt ist.

Aus der Praxis sind Walzen mit anpaßbarer Biegelinie bekannt, bei denen der Rohrmantel gleichsam schwimmend auf dem Joch angeordnet ist. Dazu ist der Rohrmantel auf seiner der Gegenwalze gegenüberliegenden Seite gegenüber dem Joch abgedichtet und auf dem dort befindlichen hydraulischen Druckpolster abgestützt (US-A-3 196 520). Die Wandstärke des Rohrmantels muß aber, um einer Abplattung infolge der Spaltpressung im Walzenspalt entgegenzuwirken, verhältnismäßig dick ausgeführt werden. Dadurch entstehen erhebliche Nachteile. Zunächst ist der Rohrmantel wegen seiner großen Wandstärke extrem biegesteif. Eine Anpassung an die Biegelinie der Gegenwalze ist nur durch wesentliche Erhöhung des Druckes im hydraulischen Druckpolster möglich. Das führt u.a. auch zu Dichtungsproblemen. Wenn der Rohrmantel zusätzlich beheizt werden soll, wird der Wärmedurchgang durch den Rohrmantel so reduziert, daß die Wärmeabstrahlung nicht mehr durch Zufuhr eines entsprechenden Heizmediums erreicht werden kann, - denn die obere, der Gegenwalze gegenüberliegende Seite des Rohrmantels kann nur bedingt mit Hilfe des zum Aufbau des hydraulischen Druckpolsters verwendeten Mediums beheizt werden. Eine Erhöhung der Temperatur des Heizmediums ist nur begrenzt möglich, weil sonst Dichtungsprobleme entstehen.

Aufgabe der Erfindung ist es, bei einer Walze der eingangs beschriebenen Gattung die Wandstärke des Rohrmantels zu verringern, damit eine bessere Anpassung der Biegelinie und eine leichtere Einstellung der Wärmeabstrahlung bei Beheizung möglich ist.

Diese Aufgabe wird dadurch gelöst, das das Joch unterhalb der Berührungslinie zwischen Rohrmantel und Gegenwalze eine sich im wesentlichen über die Länge der Berührungslinie erstreckende Wanne aufweist, in der ein frei drehbarer Rollkörper angeordnet ist, der an seinen Enden gegenüber dem Joch und an seinen Längsseiten gegenüber dem Wannenrand abgedichtet ist, und daß der Rohrmantel auf dem Rollkörper abgestützt ist, welcher von dem im inneren, abgedichteten Teil der Wanne befindlichen hydraulischen Druckpolster beaufschlagt ist.

Bei dieser Walze stützt sich der Rohrmantel im hauptsächlich belasteten Bereich des Walzenspaltes zwischen Rohrmantel und Gegenwalze auf dem Rollkörper ab, der auch die notwendige Gegenkraft zur Einstellung der gewünschten Biegelinie liefert. Der Rohrmantel kann deshalb auch dann nicht mehr abplatten, wenn er eine vergleichsweise geringe Wandstärke besitzt. Die hier mögliche geringe Wandstärke des Rohrmantels ermöglicht einerseits eine einfachere Einstellung der gewünschten Biegelinie mit wesentlich geringeren Drücken im hydraulischen Druckpolster und andererseits auch einen besseren Wärmeübergang bei Beheizung, weil der Wärmedurchgang durch den Rohrmantel weniger behindert ist.

Es versteht sich, daß der Rollkörper seinerseits so ausgebildet ist, daß er sich zwischen seinen endseitigen Lagern durchbiegen kann. Dazu sollte der Rollkörper mit endseitigen Lagerzapfen in Gelenklagern des Jochs gehalten sein. Anders ausgedrückt soll der Rollkörper der Biegelinie des Rohrmantels oder umgekehrt folgen können.

Da das hydraulische Druckpolster nur noch im Bereich der Wanne und dort zwischen dem Rollkörper und dem Wannengrund ausgebildet wird, andererseits aber der Rollkörper gegenüber der Wanne zumindest bereichsweise biegungsbedingte Bewegungen ausführt, sollten die Dichtungen zwischen den Längsseiten des Rollkörpers und dem Wannenrand im Bereich der größten Breite des Rollkörpers angreifen, - so daß die Dichtwirkung auch bei einer Durchbiegung des Rollkörpers im wesentlichen erhalten bleibt.

Das Joch kann Zu- und Ablaufkanäle für das Medium des hydraulischen Druckpolsters aufweisen, wobei der oder die Zulaufkanäle in die Wanne münden. Die Ablaufkanäle können grundsätzlich an beliebiger Stelle des Jochs so angeordnet sein, daß sie in den zwischen dem Joch und dem Rollkörper gebildeten Spaltraum oder Ringraum münden, so daß das über die Dichtungen des Rollkörpers austretende Medium zunächst in den zwischen Joch und Rohrmantel gebildeten Raum eintritt und von dort abfließt.

Darüber hinaus kann das Joch auch Versorgungsleitungen für Zu- und Ablauf eines Wärmeträgermediums aufweisen, wobei die Zulaufleitung an einem Ende und die Ablaufleitung am gegenüberliegenden Ende des Jochs in den zwischen Joch und Rohrmantel gebildeten Ringraum münden. Das bedeutet, daß das Wärmeträgermedium unabhängig von dem das Druckpolster bildenden Medium zugeführt wird. Das schließt jedoch nicht aus, daß auch daß das Druckpolster bildende Medium mit der Temperatur des Wärmeträgermediums zugeführt wird, jedoch mit entsprechend höherem Druck. Wenn sowohl ein Medium zum Aufbau des Druckpolsters als auch ein Wärmeträgermedium zugeführt werden, kann auf die Anordnung besonderer Ablaufkanäle für das das Druckpolster bildende Medium verzichtet werden, wenn beide Medien aus dem gleichen Stoff, z.B. einem O1, bestehen.

Bei dieser Walze kann darüber hinaus auch auf eine besondere hydraulische Anstellung des Jochs in Richtung auf die Gegenwalze verzichtet werden, wenn der Rohrmantel stirnseitig auf Lagerkörpern abgedichtet gelagert ist, welche jeweils eine Schlitzführung für das Joch aufweisen, wobei die Schlitzführungen sich in der durch die Achsen von Rollkörper und Gegenwalze definierten Ebene erstrecken. Dann kann nämlich der Druck des hydraulischen Druckpolsters auch zum Anpressen des Rohrmantels an die Gegenwalze ausgenutzt werden.

Die relativ zum Joch beweglichen Lagerkörper können aus Scheiben bestehen, deren Schlitze von zugeordneten abgeflachten Zapfen des Jochs durchdrungen sind. Wenn größere Durchbiegungen des Jochs selbst zu erwarten sind, können die Zapfen des Jochs in Gegenlagern von Ständern gelagert sein, die auch die Gelenklager der Gegenwalze tragen.

Im folgenden werden in der Zeichnung dargestellte Ausführungsbeispiele der Erfindung erläutert; es zeigen:

Fig. 1 in schematischer Darstellung und teilweise geschnitten eine Seitenansicht eines Kalanders mit einer Walze mit hydraulisch anpaßbarer Biegelinie sowie mit einer Gegenwalze,

Fig. 2 einen Schnitt in Richtung II-II durch den Gegenstand nach Fig. 1,

Fig. 3 teilweise eine andere Ausführung des Gegenstandes nach Fig. 1,

Fig. 4 eine Ansicht in Richtung des Pfeils IV auf den Gegenstand nach Fig. 3.

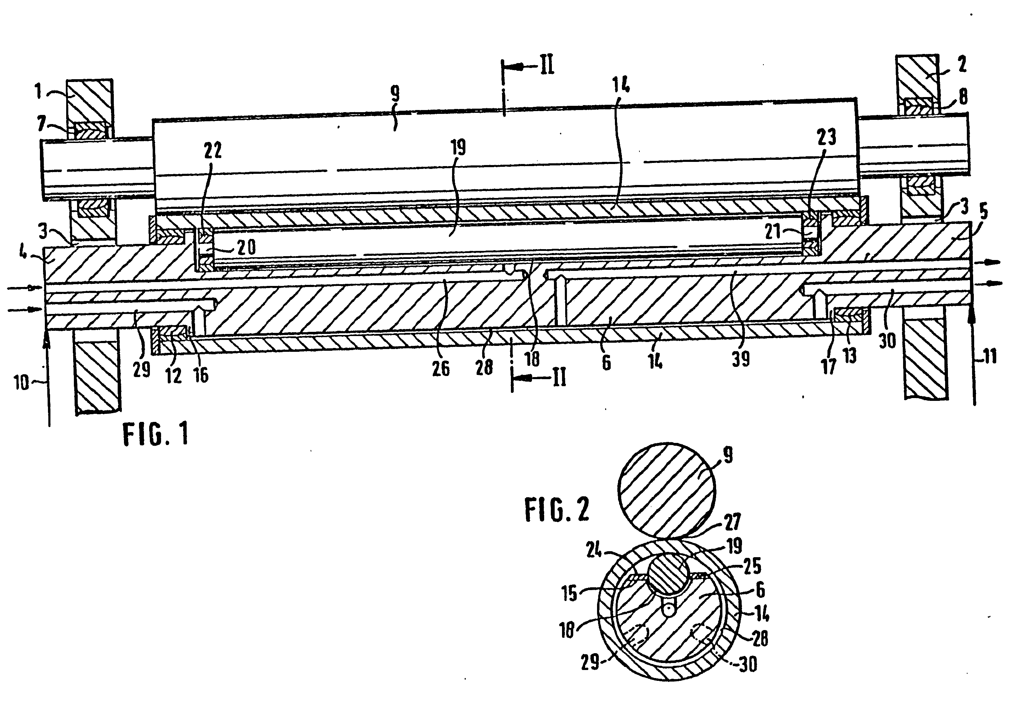

In Fig. 1 sind zwei Ständer 1, 2 eines Kalanders dargestellt. Jeder Ständer 1 bzw. 2 weist eine vertikale Schlitzführung 3 für darin eingreifende Zapfen 4 bzw. 5 eines Jochs 6 auf. Das Joch 6 ist vertikal in Richtung auf eine oberhalb des Jochs 6 in den Ständern 1, 2 in Schwenklagern 7, 8 gelagerte Gegenwalze 9 verstellbar. Die Verstelleinrichtungen sind im einzelnen nicht dargestellt, sie sind lediglich durch Pfeile 10, 11, die an den Zapfen 4, 5 angreifen, angedeutet.

Auf den Zapfen 4, 5 des Jochs 6 sitzen Schwenklager 12, 13, auf denen ein das Joch 13 umgebender und gegenüber diesem frei drehbarer Rohrmantel 14 angeordnet ist. Der Rohrmantel 14 ist in üblicher Weise gegenüber dem Joch 6 abgedichtet.

Wie man aus Fig. 2 entnimmt, besitzt das Joch 6 einen Querschnitt, der im wesentlichen einem Kreisabschnitt entspricht. Die abgeflachte Seite 15 dieses Kreisabschnittes ist auf die Gegenwalze 9 gerichtet. Sie wird in Längsrichtung des Jochs 6 von zwei Ringflanschen 16, 17 begrenzt. Über die gesamte Länge der abgeflachten Seite erstreckt sich eine Wanne 18 mit halbkreisförmigem Querschnitt, in der ein Rollkörper 19 angeordnet ist, dessen endseitige Lagerzapfen 20, 21 in zugeordneten Schwenklagern 22, 23 an den Enden der Wanne 18 angeordnet sind. Der Rollkörper 19 bzw. seine Schwenklager 22, 23 sind in axialer Richtung gegen die Radialflansche 16, 17 abgedichtet. Ferner sind längs des Wannenrandes auf der Seite 15 Längsdichtungen 24, 25 angeordnet und zwar etwa in Höhe der größten Breite des Rollkörpers 19, die den Rollkörper 19 gegen die Wanne 18 abdichten.

Das Joch 6 besitzt einen sich in axialer Richtung erstreckenden Zulaufkanal 26, der etwa in der Mitte des Jochs 6 in die Wanne 18 mündet. Über diesen Zulaufkanal 26 wird ein hydraulisches Druckmedium zugeführt, das in der Wanne 18 ein auf den Rollkörper 19 einwirkendes hydraulisches Druckpolster bildet.

Der Rollkörper 19 ist so angeordnet, daß der das Joch 6 umgebende Rohrmantel 14 sich unterhalb einer Berührungslinie 27 zwischen Gegenwalze 9 und Rohrmantel 14 auf dem Rohrkörper 19 abstützt. Anders ausgedrückt erstreckt sich die Berührungslinie 27 in einer Ebene, die von den Achsen der Gegenwalze 9 und des Jochs 6 bzw. des Rollkörpers 19 definiert wird.

Über die Einstellung des hydraulischen Drucks im Druckpolster unter dem Rollkörper 19 kann die Biegelinie des Rollkörpers 19 und damit die Biegelinie des Rohrmantels 14 im Hinblick auf die Gegenwalze 9 eingestellt werden. Das über die axialen Dichtungen und Längsdichtungen 24, 25 des Rollkörpers 19 austretende hydraulische Medium fließt in einen zwischen dem Joch 6 und dem Rohrmantel 14 gebildeten Ringraum 28, der mit einem Ablaufkanal 39 in Verbindung steht, welcher in axialer Richtung aus dem Zapfen 5 austritt.

In der bisher beschriebenen Ausführung eignet sich die Walze zum Betrieb ohne Beheizung.

Soll die Walze bzw. soll der Rohrmantel 14 beheizt werden, dann kann das Joch 6 zusätzlich eine axial in den Zapfen 4 eintretende Zulaufleitung 29 sowie eine axial aus dem Zapfen 5 austretende Ablaufleitung 30 aufweisen, die an den gegenüberliegenden Enden des Jochs 6 in den Ringraum 28 münden. Ein Wärmeträgermedium kann dann durch den Ringraum 28 gepumpt werden. Bei dem Wärmeträgermedium kann es sich grundsätzlich um das gleiche Medium handeln, welches auch zum Aufbau des Druckpolsters unterhalb des Rollkörpers 19 verwendet wird, wobei jedoch das wärmeträgermedium einen geringeren Druck aufweist. Auf den Ablaufkanal 39 im Joch 6 kann das verzichtet werden, weil das zum Aufbau des Druckpolsters verwendete Medium zusammen mit dem Wärmeträgermedium über die Ablaufleitung 30 abfließt.

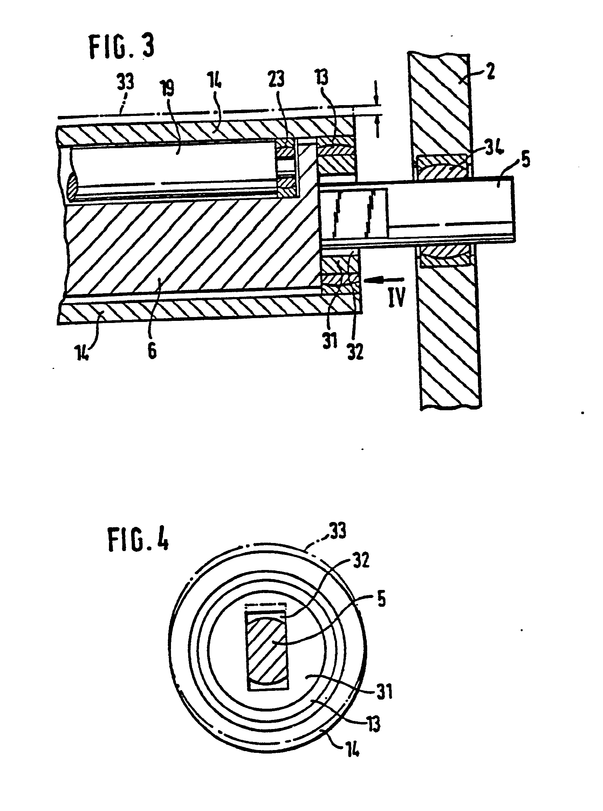

In den Fig. 3 und 4 dargestellten Ausführungen bezeichnen gleiche Bezugszeichen gleiche Teile. Das Schwenklager 13 des Rohrmantels 14 ist auf einem scheibenförmigen Lagerkörper 31 angeordnet, der eine Schlitzführung 32 für den hier abgeplatteten Zapfen 5 des Jochs aufweist. Die Schlitzführung 32 erstreckt sich in vertikaler Richtung. Bei dieser Ausführung kann auf gesonderte hydraulische Zustelleinrichtungen 10, 11 für das Joch 6 verzichtet werden, weil beim Aufbau des hydraulischen Druckpolsters unter dem Rollkörper 19 dieser Rollkörper 19 den Rohrmantel 14 anhebt und in Richtung auf die Gegenwalze 9 preßt. Der damit mögliche Hub des Rohrmantels 14 ist in den Fig. 3 und 4 mit strichpunktierten Linien 33 angedeutet.

Wenn Biegeverformungen des Jochs 6 zu befürchten sind, können in diesem Fall die Zapfen 4, 5 des Jochs 6 in Schwenklagern 34 der Ständer 1 bzw. 2 gelagert sein.

**Patentansprüche**

1. Walze mit hydraulisch anpaßbarer Biegelinie aus einem drehfesten Joch, auf dem ein drehbarer Rohrmantel gelagert ist, der auf der Seite einer dem Joch gegenüberliegenden Gegenwalze über ein hydraulisches Druckpolster auf dem Joch abgestützt ist, dadurch gekennzeichnet, daß das Joch (6) unterhalb der Berührungslinie (27) zwischen Rohrmantel (14) und Gegenwalze (9) eine sich im wesentlichen über die Länge der Berührungslinie (27) erstreckende Wanne (18) aufweist, in der ein frei drehbarer Rollkörper (19) angeordnet ist, der an seinen Enden gegenüber dem Joch (6) und an seinen Längsseiten gegenüber dem Wannenrand abgedichtet ist, und daß der Rohrmantel (14) auf dem Rollkörper (19) abgestützt ist, welcher von dem im inneren, abgedichteten Teil der Wanne (18) befindlichen hydraulischen Druckpolster beaufschlagt ist.

2. Walze nach Anspruch 1, dadurch gekennzeichnet, daß der Rollkörper (19) mit endseitigen Lagerzapfen (20, 21) in Gelenklagern (22, 23) gehalten ist.

3. Walze nach Anspruch 1 oder 2, dadurch gekennzeichnet, daß die Dichtungen (24, 25) zwischen den Längsseiten des Rollkörpers (19) und dem Wannenrand im Bereich der größten Breite des Rollkörpers (19) angreifen.

4. Walze nach einem der Ansprüche 1 bis 3, dadurch gekennzeichnet, daß das Joch (6) Zu- und Ablaufkanäle (26, 39) für das Medium des hydraulischen Druckpolsters aufweist, wobei der oder die Zulaufkanäle (26) in die Wanne (18) münden.

5. Walze nach einem der Ansprüche 1 bis 4, dadurch gekennzeichnet, daß das Joch (6) Versorgungsleitungen (29, 30) für Zu- und Ablauf eines Wärmeträgermediums aufweist, wobei die Zulaufleitung (29) an einem Ende und die Ablaufleitung (30) am gegenüberliegenden Ende des Jochs (6) in den zwischen Joch (6) und Rohrmantel (14) gebildeten Ringraum (28) münden.

6. Walze nach einem der Ansprüche 1 bis 5, dadurchgekennzeichnet, daß der Rohrmantel (14) stirnseitig auf Lagerkörpern (31) abgedichtet gelagert ist, welche eine Schlitzführung (32) für das Joch (6) aufweisen, wobei die Schlitzführungen (32) sich in der durch die Achsen von Rollkörper (19) und Gegenwalze (9) definierten Ebene erstrecken.

7. Walze nach einem der Ansprüche 1 bis 6, dadurch gekennzeichnet, daß die Lagerkörper (31) aus Scheiben bestehen, der Schlitze von zugeordneten abgeflachten Zapfen (5) des Jochs durchdrungen sind.

8. Walze nach einem der Ansprüche 1 bis 7, dadurch gekennzeichnet, daß die Zapfen (5) des Jochs in Schwenklagern (34) von Ständern (1, 2) gelagert sind, die auch die Schwenklager (7, 8) der Gegenwalze (9) tragen.

**Claims**

1. A roll with an hydraulically adjustable deflexion line [comprising] a rotationally rigid yoke, on which is mounted a rotatable tube jacket which is supported by way of an hydraulic pressure cushion on the yoke at the side of a counter roll opposite the yoke, characterized in that below the contact line (27) between the tube jacket (14) and the counter roll (9) the yoke (6) comprises a trough (18) which extends essentially over the length of the contact line (27) and in which is disposed a freely rotatable roll member (19) which is sealed off at its ends from the yoke (6) and on its longitudinal sides from the edge of the trough (18), and the tube jacket (14) is supported on the roll member (19) which is acted upon by the hydraulic pressure cushion present in the inner sealed portion of the trough (18).

2. A roll according to Claim 1, characterized in that the roll member (19) is held in pivot bearings (22, 23) by bearing journals (20, 21) at the ends.

3. A roll according to Claim 1 or 2, characterized in that the seals (24, 25) between the longitudinal sides of the roll member (19) and the edge of the trough (18) apply in the region of the greatest width of the roll member (19).

4. A roll according to any one of Claims 1 to 3, characterized in that the yoke (8) comprises supply and discharge ducts (26, 39) for the medium of the hydraulic pressure cushion, the supply duct or ducts (26) opening into the trough (18).

5. A roll according to any one of Claims 1 to 4, characterized in that the yoke (6) comprises feed lines (29, 30) for the supply and discharge of a heat carrier medium, the supply line (29) opening at one end and the discharge line (30) opening at the opposite end of the yoke (6) into the annular space (28) formed between the yoke (6) and the tube jacket (14).

6. A roll according to any one of Claims 1 to 5, characterized in that the tube jacket (14) is mounted in a sealed manner at the end faces on bearing members (31) which comprise a slotted guide (32) for the yoke (6), the slotted guides (32) extending in the plane defined defined by the axes of the roll member (19) and the counter roll (9).

7. A roll according to any one of Claims 1 to 6, characterized in that the bearing members (31) comprise discs, the slots [of which] are traversed by associated flattened journals (5) of the yoke.

8. A roll according to any one of Claims 1 to 7, characterized in that the journals (5) of the yoke are mounted in pivot bearings (34) of columns (1, 2) which also support the pivot bearings of the counter roll (9).

## Revendications

1. Cylindre avec ligne de flexion adaptable hydrauliquement formé d'une culasse fixe en rotation sur laquelle est montée une enveloppe tubulaire pouvant tourner, qui est soutenue sur la culasse, du côté d'un cylindre complémentaire opposé à la culasse, par l'intermédiaire d'un coussin hydraulique de presion, daractérisé en ce que la culasse (6) présente, en dessous de la ligne de contact (27) entre enveloppe tublaire 14 et cylindre complémentaire (9), une cuvette (18) s'étendant pratiquement sur la longueur de la ligne de contact (27), dans laquelle est disposé un corps de rouleau (19) pouvant tourner librament, qui est rendu étanche à ses extrémités vis-à-vis de la culasse (6) et à ses côtés longitudinaux vis-à-vis du bord de la cuvette, et en ce que l'enveloppe tublaire (14) est soutenue sur le corps de rouleau (19) qui subit l'action du coussin hydraulique de pression situé dans la partie intérieure étanche de la cuvette (18).

2. Cylindre selon la revendication 1, caractérisé en ce que le corps de rouleau (19) est retenu, par des tourillons terminaux (20, 21), dans des paliers d'articulation (22, 23).

3. Cylindre selon l'une des revendications 1 et 2, caractérisé en ce que les joints (24, 25) s'engagent, entre les côté longitudinaux du corps de rouleau (19) et le bord de la cuvette, dans la région de largeur maximale de corps de rouleau (19).

4. Cylindre selon l'une des revendications 1 à 4, caractérisé en ce que la culasse (6) présente des canaux d'amenée et d'évacuation (26, 39) pour le fluide du coussin hydraulique de pression, le ou les canaux d'amenée (26) débouchant dans la cuvette (18).

5. Cylindre selon l'une des revendications 1 à 4, caractérisé en ce que la culasse (6) présente des tuyaux d'alimentation (29, 30) pour l'amenée et l'évacuation d'un fluide caloporteur, le tuyau d'amenée (29) débouchant à une extrémité et le tuyau d'évacuation (30) à l'extrémité opposée de la culasse (6), dans l'espacement annulaire (28) formé entre culasse (6) et enveloppe tubulaire (14).

6. Cylindre selon l'une des revendications 1 à 5, caractérisé en ce que l'enveloppe tubulaire (14) est montée de façon étanche du côté frontal sur des corps de palier (31) qui présentent un guide à fente (32) pour la culasse (6), les guides à fente (32) s'étendant dans le plan défini par les axes du corps de rouleau (19) et du cylindre complémentaire.

7. Cylindre selon l'une des revendications 1 à 6, caractérisé en ce que les corps de palier (31) sont formés de disques dont les fentes sont traversées par des tourillons aplatis correspondants (5) de la culasse.

8. Cylindre selon l'une des revendications 1 à 7, caractérisé en ce que les tourillons (5) de la culasse sont montés dans des paliers de pivotement (34) de montants (1, 2) qui portent aussi les paliers de pivotement (7, 8) du cylindre complémentaire (9).

FIG. 1

FIG. 2

## FIG. 3

## FIG. 4